# EUROPÄISCHE PATENTSCHRIFT

(11) **EP 0 868 556 B1**
(45) Veröffentlichungstag und Bekanntmachung des Hinweises auf die Patenterteilung: **10.05.2000**
(21) Anmeldenummer: 96944611.1
(22) Anmeldetag: 20.12.1996
(51) Int. Cl.: D04H 13/00, C04B 30/02

(54) **FASERGEBILDE-AEROGEL-VERBUNDMATERIAL ENTHALTEND MINDESTENS EIN THERMOPLASTISCHES FASERMATERIAL, VERFAHREN ZU SEINER HERSTELLUNG, SOWIE SEINE VERWENDUNG**
FIBROUS-FORMATION AEROGEL COMPOSITE MATERIAL CONTAINING AT LEAST ONE THERMOPLASTIC FIBROUS MATERIAL, PROCESS FOR THE PRODUCTION THEREOF, AND USE THEROF
MATERIAU COMPOSITE A BASE D'UN PRODUIT FIBREUX QUI EST UN AEROGEL CONTENANT AU MOINS UN MATERIAU FIBREUX THERMOPLASTIQUE, SON PROCEDE DE PRODUCTION ET SON UTILISATION

(30) Priorität: 21.12.1995 DE 19548128
(43) Veröffentlichungstag der Anmeldung: 07.10.1998
(73) Patentinhaber: CABOT CORPORATION, Boston, MA 02109 (US)
(72) Erfinder: FRANK, Dierk, D-65719 Hofheim (DE); ZIMMERMANN, Andreas, D-64347 Griesheim (DE); THÖNNESSEN, Franz, D-86299 Bobingen (DE)
(74) Vertreter: Luderschmidt, Schüler & Partner GbR
(86) Internationale Anmeldenummer: EP9605760
(87) Internationale Veröffentlichungsnummer: WO9723675

(56) Entgegenhaltungen:
- EP-A- 0 269 462
- EP-A- 0 340 707
- EP-A- 0 432 438
- DE-A- 3 346 180
- US-A- 5 221 573

## Beschreibung

Die Erfindung betrifft ein Verbundmaterial, das mindestens ein Gebilde aus Fasern und Aerogel-Partikel aufweist, ein Verfahren zu seiner Herstellung sowie seine Verwendung.

Aerogele, insbesondere solche mit Porositäten über 60 % und Dichten unter 0,4 g/cm³, weisen aufgrund ihrer sehr geringen Dichte, hohen Porosität und geringen Porendurchmesser eine äußerst geringe thermische Leitfähigkeit auf und finden deshalb Anwendung als Wärmeisolationsmaterialien, wie z.B. in der EP-A-0 171 722 beschrieben.

Die hohe Porosität führt aber auch zu einer geringen mechanischen Stabilität sowohl des Gels, aus dem das Aerogel getrocknet wird, als auch des getrockneten Aerogels selbst.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel. Es ist anzumerken, daß es sich bei den erfindungsgemäßen Gelen um Aerogele im Sinne von Gel mit Luft als Dispersionsmittel handelt.

Der Formgebungsprozeß des Aerogels wird während des Sol-Gel-Übergangs abgeschlossen. Nach Ausbildung der festen Gelstruktur kann die äußere Form nur noch durch Zerkleinerung, beispielsweise Mahlen, verändert werden. Für eine andere Form der Bearbeitung ist das Material zu brüchig.

Für viele Anwendungen ist es jedoch notwendig, die Aerogele in Gestalt bestimmter Formkörper einzusetzen. Im Prinzip ist die Herstellung von Formkörpern schon während der Gelherstellung möglich. Jedoch würde der während der Herstellung typischerweise notwendige, diffusionsbestimmte Austausch von Lösungsmitteln (bzgl. Aerogele: z.B. US-A 4,610,863, EP-A 0 396 076, bzgl. Aerogel-Verbundmaterialien: z. B. WO 93/06044) und die ebenfalls diffusionsbestimmte Trocknung zu unwirtschaftlich langen Produktionszeiten führen. Daher ist es sinnvoll, im Anschluß an die Aerogel-Herstellung, also nach der Trocknung, einen Formgebungsschritt durchzuführen, ohne daß eine wesentliche Änderung der inneren Struktur des Aerogels im Hinblick auf die Anwendung stattfindet.

Für viele Anwendungen, z.B. zur Isolierung von gewölbten oder unregelmäßig geformten Flächen, sind flexible Platten bzw. Matten aus einem Dämmstoff notwendig.

In der DE-A 33 46 180 werden biegefeste Platten aus Preßkörpern auf der Basis von aus der Flammpyrolyse gewonnenem Kieselsäureaerogel in Verbindung mit einer Verstärkung durch mineralische Langfasern beschrieben. Bei diesem aus der Flammpyrolyse gewonnenem Kieselsäureaerogel handelt es sich jedoch nicht um ein Aerogel im obigen Sinne, da es nicht durch Trocknung eines Gels hergestellt wird und damit eine gänzlich andere Porenstruktur aufweist. Es ist mechanisch stabiler und kann daher ohne Zerstörung der Mikrostruktur gepreßt werden, weist aber eine höhere Wärmeleitfähigkeit als typische Aerogele im obigen Sinne auf. Die Oberfläche solcher Preßkörper ist sehr empfindlich und muß daher etwa durch Einsatz eines Binders an der Oberfläche gehärtet oder durch Kaschierung mit einer Folie geschützt werden. Weiter ist der entstehende Preßkörper nicht kompressibel.

Weiter wird in der DE-A-44 18 843 eine Matte aus einem faserverstärkten Aerogel beschrieben. Diese Matten weisen zwar durch den sehr hohen Aerogelanteil eine sehr geringe Wärmeleitfähigkeit auf, doch sind für ihre Herstellung auf Grund der oben beschriebenen Diffusionsprobleme relativ lange Herstellungszeiten notwendig. Insbesondere ist die Herstellung dickerer Matten nur durch Kombination mehrerer dünner Matten sinnvoll möglich und erfordert damit zusätzlichen Aufwand.

Aufgabe der vorliegenden Erfindung war es daher, ein Verbundmaterial auf der Basis von Aerogel-Granulat bereitzustellen, das eine niedrige Wärmeleitfähigkeit aufweist, das mechanisch stabil ist und die einfache Herstellung von Matten oder Platten erlaubt.

Diese Aufgabe wird gelöst durch ein Verbundmaterial, das mindestens ein Gebilde aus Fasern und Aerogel-Partikeln aufweist, das dadurch gekennzeichnet ist, daß das Fasergebilde mindestens ein thermoplastisches Fasermaterial enthält, mit dem die Aerogel-Partikel und durch das die Fasern im Gebilde untereinander verbunden sind, derart, daß diese thermoplastischen Fasern an der Oberfläche angeschmolzen wurden und dann bei Abkühlung zu einer Verbindung von Fasern untereinander als auch mit den Aerogel-Partikeln führen. Diese thermische Verfestigung sorgt für ein stabiles Fasergebilde und für eine Bindung der Aerogel-Partikel an die Faser.

Unter einem Gebilde von Fasern ist hier jedes Gebilde zu verstehen, das mit einer flächenbildenden Technik hergestellt werden kann. Beispiele für solche Flächengebilde sind Gewebe, Gelege, Gestricke, Gewirke und Vliese, wobei Vliese bevorzugt sind.

Als Vliese werden sogenannte Stapelfaservliese, d.h. Vliese mit Fasern endlicher Länge, sowie Spinnvliese, d.h. Vliese aus Endlosfasern, verstanden.

Bei den thermoplastischen Fasern, im folgenden erstes Fasermaterial genannt, handelt es sich um Fasern aus einem thermoplastischen, organischen Material, wie z.B. Polyolefinfasern, Polyamidfasern oder vorzugsweise Polyesterfasern. Die Fasern können runde, trilobale, pentalobale, oktalobale, bändchen-, tannenbaum-, hantel- oder andere sternförmige Profile aufweisen. Ebenso können Hohlfasern verwendet werden. Das erste Fasermaterial kann glatt oder gekräuselt sein.

Zusätzlich kann das Fasergebilde noch mindestens ein weiteres Fasermaterial enthalten, das bei der thermischen Verfestigung mit den ersten Fasern aus thermoplastischem Material verbunden wird.
Dazu darf der Schmelzpunkt des Materials dieser Fasern nicht unter der Temperatur liegen, bei der das Vlies thermisch verfestigt wird. Bei den Fasern kann es sich sowohl um anorganische Fasern, wie z.B. Mineral- oder Glasfasern, als auch um organische Fasern, wie z.B. Polyolefin-, Polyamid- oder Polyesterfasern, oder Mischungen derselben, handeln. Vorzugsweise bestehen die weiteren Fasern aus dem gleichen Material wie die ersten Fasern, weisen jedoch ein anderes Profil, einen anderen Durchmesser, eine andere Kräuselung und/oder einen anderen Verstreckungsgrad auf.

Die Fasern können durch übliche Zusätze modifiziert sein, beispielsweise durch Antistatika, wie Ruß. Zur Reduktion des Strahlungsbeitrages zur Wärmeleitfähigkeit können die im Gebilde enthaltenen Fasern ein IR-Trübungsmittel wie z.B. Ruß, Titandioxid, Eisenoxiden oder Zirkondioxid sowie Mischungen derselben enthalten. Zur Farbgebung können die Fasern auch gefärbt sein.

Der Durchmesser der im Verbundstoff verwendeten Fasern sollte vorzugsweise kleiner als der mittlere Durchmesser der Aerogel-Partikel sein, um einen hohen Anteil Aerogel in dem Fasergebilde binden zu können. Durch Wahl von sehr dünnen Faserdurchmessern lassen sich Matten herstellen, die sehr flexibel sind, während dickere Fasern durch ihre größere Biegesteifigkeit zu voluminöseren und starreren Matten führen.

Der Titer der Fasern sollte vorzugsweise zwischen 0,8 und 40 dtex liegen.

Es können auch Mischungen von Fasern aus verschiedenen Materialien, mit verschiedenen Profilen und/oder verschiedenen Titern verwendet werden. So führt eine Zumischung von dickeren Fasern zu einer größeren Biegesteifigkeit. Um einerseits eine gute Verfestigung des Vlieses zu erreichen, andererseits eine gute Haftung des Aerogel-Granulates sollte der Gewichtsanteil an erstem, thermoplastischem Fasermaterial zwischen 10 und 100 Gew.-%, vorzugsweise zwischen 40 und 100 Gew.-%, bezogen auf den Gesamtfaseranteil, liegen.

Von den Spinnvliesen sind solche aus Fasern aus synthetischen Polymeren, sogenannte Spunbonds, die durch eine Wirrablage frisch schmelzgesponnener Filamente erzeugt werden, bevorzugt. Sie bestehen aus Endlos-Synthesefasern aus schmelzspinnbaren Polymermaterialien. Geeignete Polymermaterialien sind beispielsweise Polyamide, wie z.B. Polyhexamethylen-diadipamid, Polycaprolactam, aromatische oder teilaromatische Polyamide ( Aramide ), aliphatische Polyamide, wie z.B. Nylon, teilaromatische oder vollaromatische Polyester, Polyphenylensulfid (PPS), Polymere mit Ether- und Ketogruppen, wie z.B. Polyetherketone (PEK) und Polyetheretherketon (PEEK), oder Polybenzimidazole.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure. Gängige Diole haben 2 bis 4 C-Atome, wobei das Ethylenglykol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glykoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäuren wie z.B. Glutarsäure, Adipinsäure, Sebazinsäure; Beispiele für modifizierend wirkende Diolreste sind solche von längerkettigen Diolen, z. B. von Propandiol oder Butandiol, von Di- oder Triethylenglykol oder, sofern in geringer Menge vorhanden, von Polyglykol mit einem Molgewicht von ca. 500 bis 2000. Besonders bevorzugt sind Polyester, die mindestens 95 mol % Polyethylenterephthalat (PET) enthalten, insbesondere solche aus unmodifiziertem PET.

Sollen die erfindungsgemäßen Verbundmaterialien zusätzlich eine flammhemmende Wirkung haben, so ist es von Vorteil, wenn sie aus flammhemmend modifizierten Polyestern ersponnen wurden. Derartige flammhemmend modifizierten Polyester sind bekannt. Sie enthalten Zusätze von Halogenverbindungen, insbesondere Bromverbindungen, oder, was besonders vorteilhaft ist, sie enthalten Phosphonverbindungen, die in die Polyesterkette einkondensiert sind.

Besonders bevorzugt enthalten die Spinnvliese flammhemmend modifizierte Polyester, die in der Kette Baugruppen der Formel (I) 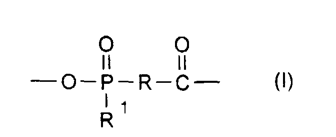 worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten. Vorzugsweise bedeuten in der Formel (I) R Ethylen und R¹ Methyl, Ethyl, Phenyl, oder o-, m- oder p-Methyl-phenyl, insbesondere Methyl. Derartige Spinnvliese werden z.B. in der DE-A-39 40 713 beschrieben.

Die in den Spinnvliesen enthaltenen Polyester haben vorzugsweise ein Molekulargewicht entsprechend einer intrinsischen Viskosität (IV), gemessen in einer Lösung von 1 g Polymer in 100 ml Dichloressigsäure bei 25°C, von 0,6 bis 1,4.

Die Einzeltiter der Polyesterfilamente im Spinnvlies betragen zwischen 1 und 16 dtex, vorzugsweise 2 bis 8 dtex.

In einer weiteren Ausführungsform der Erfindung kann das Spinnvlies auch ein weiteres Fasermaterial als Trägerfasern enthalten. Derartige Spinnvliese sind beispielsweise in der EP-A-0,446,822, der EP-A-0,530,769 und der EP-A-0,590,629 beschrieben.

Beispiele für Polymere, von denen sich die Trägerfasern ableiten können, sind Polyacrylnitril, Polyolefine, wie Polyethylen, im wesentlichen aliphatische Polyamide, wie Nylon 6.6, im wesentlichen aromatische Polyamide (Aramide), wie Poly-(p-phenylenterephthalat) oder Copolymere enthaltend einen Anteil an aromatischen m-Diamineinheiten zur Verbesserung der Löslichkeit oder Poly-(m-phenylenisophthalat), im wesentlichen aromatische Polyester, wie Poly-(p-hydroxybenzoat) oder vorzugsweise im wesentlichen aliphatische Polyester, wie Polyethylenterephthalat.

Der Anteil der beiden Fasertypen zueinander kann in weiten Grenzen gewählt werden, wobei darauf zu achten ist, daß der Anteil der thermoplastischen Fasern so hoch gewählt wird, daß der Vliesstoff durch Verklebung der Trägerfasern mit den thermoplastischen Fasern eine für die gewünschte Anwendung ausreichende Festigkeit erhält. Der Anteil an thermoplastischen Fasern beträgt dann üblicherweise weniger als 50 Gew.-%, bezogen auf das Gewicht des Vliesstoffes.

Als thermoplastische Fasermaterialien kommen insbesondere modifizierte Polyester mit einem gegenüber dem Vliesstoff-Rohstoff um 10 bis 50 °C, vorzugsweise 30 bis 50 °C abgesenkten Schmelzpunkt in Betracht. Beispiele für derartige Fasermaterialien sind Polypropylen, Polybutylenterephthalat oder durch Einkondensieren längerkettiger Diole und/oder von Isophthalsäure oder aliphatischen Dicarbonsäuren modifiziertes Polyethylenterephthalat.

Vorzugsweise sind Trägerfasern und thermoplastische Fasern aus einer Polymerklasse aufgebaut. Darunter ist zu verstehen, daß alle eingesetzten Fasern aus einer Substanzklasse so ausgewählt werden, daß diese nach Gebrauch des Vlieses problemlos recycliert werden können.

Die Einzelfasertiter der Trägerfasern und der thermoplastischen Fasern können innerhalb weiter Grenzen gewählt werden. Beispiele für übliche Titerbereiche sind 1 bis 16 dtex, vorzugsweise 2 bis 6 dtex.

In einer weiteren Ausführungsform können die Spinnvliese nach einer mechanischen Verfestigung durch Vernadelung und/oder mittels Fluidstrahlen gegebenenfalls mit Hilfe eines chemischen Binders beispielsweise auf Basis eines Polyacrylats endverfestigt werden.

Das Flächengewicht des Spinnvlieses beträgt zwischen 20 und 500 g/m², vorzugsweise 30 und 250 g/m².

Der Volumenanteil des Aerogels im Verbundmaterial sollte möglichst hoch, mindestens 40 %, bevorzugt über 60 % sein. Um noch eine mechanische Stabilität des Verbundstoffes zu erreichen sollte der Anteil jedoch nicht über 95%, vorzugsweise nicht über 90 % liegen.

Geeignete Aerogele für die erfindungsgemäßen Zusammensetzungen sind solche auf der Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie beispielsweise Melaminformaldehydkondensate (US-A-5,086,085) oder Resorcinformaldehydkondensate (US-A-4,873,218). Sie können auch auf Mischungen der obengenannten Materialien basieren. Bevorzugt verwendet werden Aerogele, enthaltend Si-Verbindungen, insbesondere SiO₂-Aerogele und ganz besonders bevorzugt SiO₂-Xerogele. Zur Reduktion des Strahlungsbeitrags der Wärmeleitfähigkeit kann das Aerogel IR-Trübungsmittel, wie z.B. Ruß, Titandioxid, Eisenoxide, Zirkondioxid oder Mischungen derselben enthalten.
Darüber hinaus gilt, daß die thermische Leitfähigkeit der Aerogele mit zunehmender Porosität und abnehmender Dichte abnimmt. Aus diesem Grund sind Aerogele mit Porositäten über 60 % und Dichten unter 0,4 g/cm³ bevorzugt.
Die Wärmeleitfähigkeit des Aerogel-Granulats sollte weniger als 40 mW/mK, vorzugsweise weniger als 25 mW/mK, betragen.

In einer bevorzugten Ausführungsform weisen die Aerogel-Partikel hydrophobe Oberflächengruppen auf. Um einen späteren Kollaps der Aerogele durch Kondensation von Feuchtigkeit in den Poren zu vermeiden, ist es nämlich vorteilhaft, wenn auf der inneren Oberfläche der Aerogele hydrophobe Gruppen kovalent vorhanden sind, die unter Wassereinwirkung nicht abgespalten werden. Bevorzugte Gruppen zur dauerhaften Hydrophobisierung sind trisubstituierte Silylgruppen der allgemeinen Formel -Si(R)₃, besonders bevorzugt Trialkyl- und/oder Triarylsilylgruppen, wobei jedes R unabhängig ein nicht reaktiver, organischer Rest wie C₁-C₁₈ -Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann, wie in der WO 94/25149 beschrieben, erfolgen oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. ller, The Chemistry of Silica, Wiley & Sons, 1979), geschehen.

Die Größe der Körner richtet sich nach der Anwendung des Materials. Um jedoch einen hohen Anteil von Aerogel-Granulat binden zu können, sollten die Partikel größer als die Faserdurchmesser, vorzugsweise größer als 30 µm sein. Um eine hohe Stabilität zu erreichen sollte das Granulat nicht zu grobkörnig sein, vorzugsweise sollten die Körner kleiner als 2 cm sein.

Zur Erreichung hoher Aerogel-Volumenanteile kann vorzugsweise Granulat mit einer bimodalen Korngrößenverteilung verwendet werden. Weiter können auch andere geeignete Verteilungen Verwendung finden.

Die Brandklasse des Verbundmaterials wird durch die Brandklasse des Aerogels und der Fasern bestimmt. Um eine möglichst günstige Brandklasse des Verbundmaterials zu erhalten, sollten vorzugsweise schwerentflammbare Fasertypen, wie z.B. TREVIRA CS^{®}, verwendet werden.

Besteht das Verbundmaterial nur aus dem Fasergebilde, das die Aerogel-Partikel enthält, kann bei mechanischer Beanspruchung des Verbundmaterials Aerogel-Granulat brechen oder sich von der Faser lösen, so daß Bruchstücke aus dem Gebilde herausfallen können.

Für bestimmte Anwendungen ist es daher vorteilhaft, wenn das Faservlies auf einer oder beiden Seiten mit jeweils mindestens einer Deckschicht versehen ist, wobei die Deckschichten gleich oder verschieden sein können. Die Deckschichten können beispielsweise bei der thermischen Verfestigung über die thermoplastischen Fasern mittels eines anderen Klebers verklebt werden, wobei die Deckschicht z.B. eine Kunststoffolie, vorzugsweise eine Metallfolie oder eine metallisierte Kunststoffolie sein kann. Ferner kann die jeweilige Deckschicht selbst aus mehreren Schichten bestehen.

Bevorzugt ist ein Faser-Aerogel-Verbundmaterial in Form von Matten oder Platten, das ein aerogelhaltiges Fasergebilde als Mittelschicht und auf beiden Seiten jeweils eine Deckschicht aufweist, wobei mindestens eine der Deckschichten Lagen aus feinen thermoplastischen Fasern enthält, und die einzelnen Faserschichten in sich und untereinander thermisch verfestigt sind. Die Deckschicht kann auch Bikomponentenfasern enthalten. Bikomponentenfasern sind Chemiefasern aus zwei festverbundenen Polymeren von unterschiedlichem chemischen und/oder physikalischem Aufbau, die Bereiche mit unterschiedlichen Schmelzpunkten, d.h. nieder- und höherschmelzende Bereiche aufweisen. Typischerweise weisen diese Fasern eine Kern-Mantel-Struktur, bei der die niedrigschmelzende Komponente den Mantel bildet, oder eine Side-by-side-Struktur auf.

Zur Auswahl der Fasern der Deckschicht gilt das gleiche wie für die Fasern des Fasergebildes, in das die Aerogel-Partikel eingebunden sind. Um eine möglichst dichte Deckschicht zu erhalten, sollten jedoch die Fasern Durchmesser kleiner als 30 µm, vorzugsweise kleiner als 15 µm, besitzen.

Um eine größere Stabilität oder Dichte der Oberflächenlagen zu erzielen, können die Lagen der Deckschichten vernadelt sein.

Eine weitere Aufgabe der vorliegenden Erfindung ist es, ein Verfahren zur Herstellung des erfindungsgemäßen Verbundmaterials bereitzustellen.

Die Herstellung des erfindungsgemäßen Verbundmaterials wird im folgenden für die bevorzugten Faservlies ausführlich beschrieben, ohne jedoch darauf beschränkt zu sein.

Zur Herstellung des Faservlieses werden entweder Stapelfasern in Form handelsüblicher Karden oder Krempeln oder Endlosfasern eingesetzt. Während das Vlies nach den dem Fachmann geläufigen Verfahren gelegt wird, wird das Aerogel-Granulat eingestreut. Beim Einbringen des Aerogel-Granulates in den Faserverbund ist auf eine möglichst gleichmäßige Verteilung der Granulatkörner zu achten. Dies wird durch handelsübliche Streuvorrichtungen erreicht.

Bei Einsatz von Deckschichten kann auf einer Deckschicht das Faservlies unter Einstreuen des Aerogels gelegt werden, nach Beendigung dieses Vorgangs wird die obere Deckschicht aufgebracht.

Werden Deckschichten aus feinerem Fasermaterial verwendet, wird zunächst die untere Deckschicht aus feinen Fasern und/oder Bikomponentenfasern nach bekannten Verfahren gelegt und gegebenenfalls vernadelt. Darauf wird, wie oben geschildert, der aerogelhaltige Faserverbund aufgebracht. Für eine weitere, obere Deckschicht kann, wie für die untere Deckschicht, aus feinen Fasern und/oder Bikomponentenfasern eine Schicht gelegt und gegebenenfalls vernadelt werden.

Der resultierende Faserverbund wird gegebenenfalls unter Druck bei Temperaturen oberhalb der Schmelztemperatur des Fasermaterials mit der niedrigsten Schmelztemperatur thermisch verfestigt. Der Druck liegt zwischen Normaldruck und der Druckfestigkeit des verwendeten Aerogels. Die Dauer der Temperatureinwirkung ist dabei so kurz zu wählen, daß die Fasern nur oberflächlich anschmelzen.

Die ganzen Verarbeitungsvorgänge können bevorzugt kontinuierlich auf dem Fachmann bekannten Anlagen hergestellt werden.

Die erfindungsgemäßen Platten und Matten eignen sich auf Grund ihrer geringen Wärmeleitfähigkeit als Wärmeisolationsmaterial.

Daneben können die erfindungsgemäßen Platten und Matten als Schallabsorptionsmaterialien direkt oder in Form von Resonanzabsorbern verwendet werden, da sie eine geringe Schallgeschwindigkeit und, verglichen mit monolithischen Aerogelen, eine höhere Schalldämpfung aufweisen. Zusätzlich zu der Dämpfung des Aerogelmaterials tritt nämlich je nach Permeabilität des Faservlieses eine zusätzliche Dämpfung durch Luftreibung zwischen den Poren in dem Fasergebilde auf. Die Permeabilität des Faservlieses kann durch Veränderung des Faserdurchmessers, der Vliesdichte und der Korngröße der Aerogel-Partikel beeinflußt werden. Enthält das Fasergebilde noch Deckschichten, so sollten diese Deckschichten ein Eindringen des Schalls in das Fasergebilde erlauben und nicht zu einer weitgehenden Reflexion des Schalls führen.

Die erfindungsgemäßen Platten und Matten eignen sich weiterhin auf Grund der Porosität des Fasergebildes und besonders der großen Porosität und spezifischen Oberfläche des Aerogels auch als Adsorptionsmaterialien für Flüssigkeiten, Dämpfe und Gase. Dabei kann durch Modifikation der Aerogel-Oberfläche eine spezifische Adsorption erzielt werden.

Die vorliegende Erfindung wird im folgenden anhand von Ausführungsbeispielen näher beschrieben, ohne dadurch jedoch beschränkt zu werden.

### Beispiel 1:

Aus 50 Gew.-% TREVIRA 290 0,8 dtex/38 mm hm und 50 Gew.-% TREVIRA Schmelzklebefaser 3,3 dtex/60 mm hm (Versuchsfaser) wurde ein Faservlies mit einem Flächengewicht von 100 g/m² gelegt. Während des Legens wurde ein Aerogel-Granulat auf der Basis von Tetraethylorthosilikat mit einer Dichte von 150 kg/m³ und einer Wärmeleitfähigkeit von 23 mW/mK mit Korngrößen von 1 bis 2 mm Durchmesser eingestreut.
Das so entstandene Vliesverbundmaterial wurde bei einer Temperatur von 160°C für 5 Minuten thermisch verfestigt und auf eine Dicke von 1,4 cm komprimiert.
Die resultierende Platte ließ sich leicht biegen. Die Wärmeleitfähigkeit wurde mit einer Plattenmethode nach DIN 52612 Teil 1 zu 27 mW/mK bestimmt.

### Beispiel 2:

Aus 50 Gew.-% TREVIRA 120 Stapelfasern mit einem Titer von 1,7 dtex, Länge 35 mm, spinnschwarz und 50 Gew.-% TREVIRA Schmelzklebefaser 3,3 dtex/60 mm hm (Versuchsfaser) wurde zunächst ein Vlies gelegt, das als untere Deckschicht diente. Diese Deckschicht hatte ein Flächengewicht von 100 g/m². Darauf wurde als Mittelschicht ein Faservlies aus 50 Gew.-% TREVIRA 292, 40 dtex/60 mm hm und 50 Gew.-% TREVIRA Schmelzklebefaser 3,3 dtex/60 mm hm (Versuchsfaser) mit einem Flächengewicht von 100 g/m² gelegt. Während des Legens wurde ein Aerogel-Granulat auf der Basis von Tetraethylorthosilikat mit einer Dichte von 150 kg/m³ und einer Wärmeleitfähigkeit von 23 mW/mK mit Korngrößen von 2 bis 4 mm Durchmesser eingestreut. Auf dieses aerogelhaltige Faservlies wurde eine Deckschicht gelegt, die wie die untere Deckschicht aufgebaut wurde.

Das so entstandene Verbundmaterial wurde bei einer Temperatur von 160°C für 5 Minuten thermisch verfestigt und auf eine Dicke von 1,5 cm komprimiert. Der Volumenanteil an Aerogel in der verfestigten Matte betrug 51 %. Die Wärmeleitfähigkeit wurde mit einer Plattenmethode nach DIN 52612 Teil 1 zu 29 mW/mK bestimmt.

## Patentansprüche

1. Verbundmaterial, das mindestens ein Gebilde aus Fasern und Aerogel-Partikel aufweist, dadurch gekennzeichnet, daß das Fasergebilde mindestens ein thermoplastisches Fasermaterial enthält, mit dem die Aerogel Partikel und durch das die Fasern im Gebilde untereinander verbunden sind.

2. Verbundmaterial gemäß Anspruch 1, dadurch gekennzeichnet, daß das Fasergebilde ein Faservlies ist.

3. Verbundmaterial gemäß Anspruch 1 oder 2, dadurch gekennzeichnet, daß das Fasergebilde zusätzlich mindestens ein weiteres Fasermaterial enthält.

4. Verbundmaterial gemäß mindestens einem der Ansprüche 1 bis 3, dadurch gekennzeichnet, daß der Titer des thermoplastischen Fasermaterials im Bereich von 0,8 bis 40 dtex liegt.

5. Verbundmaterial gemäß mindestens einem der Ansprüche 1 bis 4, dadurch gekennzeichnet, daß der Anteil der Aerogel-Partikel im Verbundmaterial mindestens 40 Vol.-% beträgt.

6. Verbundmaterial gemäß mindestens einem der Ansprüche 1 bis 5, dadurch gekennzeichnet, daß das Aerogel ein SiO₂-Aerogel ist.

7. Verbundmaterial gemäß mindestens einem der Ansprüche 1 bis 6, dadurch gekennzeichnet, daß das thermoplastische Fasermaterial und/oder die Aerogel-Partikel mindestens ein IR-Trübungsmittel enthalten.

8. Verbundmaterial gemäß mindestens einem der Ansprüche 1 bis 7, dadurch gekennzeichnet, daß die Aerogel-Partikel Porositäten über 60 %, Dichten unter 0,4 g/cm³ und Wärmeleitfähigkeiten von weniger als 40 mW/mK, vorzugsweise weniger als 25 mW/mK, aufweisen.

9. Verbundmaterial gemäß mindestens einem der Ansprüche 1 bis 8, dadurch gekennzeichnet, daß die Aerogel-Partikel hydrophobe Oberflächengruppen aufweisen.

10. Verbundmaterial gemäß mindestens einem der Ansprüche 1 bis 9, dadurch gekennzeichnet, daß das Faservlies auf einer oder beiden Seiten mit jeweils mindestens einer Deckschicht versehen ist, wobei die Deckschichten gleich oder verschieden sein können.

11. Verbundmaterial gemäß Anspruch 10, dadurch gekennzeichnet, daß die Deckschichten Kunststoffolien, Metallfolien, metallisierte Kunststoffolien oder vorzugsweise Vlieslagen aus feinen einfachen Fasern und/oder feinen Bikomponenten-Fasern, enthalten.

12. Verbundmaterial gemäß mindestens einem der Ansprüche 1 bis 11 in Form einer Platte oder Matte.

13. Verfahren zur Herstellung eines Verbundmaterials gemäß Anspruch 1, dadurch gekennzeichnet, daß man in ein Fasergebilde, vorzugsweise ein Faservlies, das mindestens ein thermoplastisches Fasermaterial enthält, die Aerogel-Partikel einstreut und den resultierenden Faserverbund gegebenenfalls unter Druck bei Temperaturen oberhalb der niedrigsten Schmelztemperatur thermisch verfestigt.

14. Verwendung eines Verbundmaterials gemäß mindestens einem der Ansprüche 1 bis 12 zur Wärmedämmung, zur Schalldämpfung und/oder als Adsorptionsmaterial für Gase, Dämpfe und Flüssigkeiten.

## Claims

1. A composite material comprising at least one structure consisting of fibres and aerogel particles, characterised in that the fibre structure contains at least one thermoplastic fibre material to which the aerogel particles are connected and by which the fibres in the structure are connected to one another.

2. A composite material according to claim 1, characterised in that the fibre structure is a fibre fleece.

3. A composite material according to claim 1 or 2, characterised in that the fibre structure additionally contains at least one further fibre material.

4. A composite material according to at least one of claims 1 to 3, characterised in that the titre of the thermoplastic fibre material is in the range from 0.8 to 40 dtex.

5. A composite material according to at least one of claims 1 to 4, characterised in that the proportion of aerogel particles in the composite material is at least 40% by volume.

6. A composite material according to at least one of claims 1 to 5, characterised in that the aerogel is an SiO₂ aerogel.

7. A composite material according to at least one of claims 1 to 6, characterised in that the thermoplastic fibre material and/or the aerogel particles contain at least one infra-red opacifier.

8. A composite material according to at least one of claims 1 to 7, characterised in that the aerogel particles display porosities above 60%, densities below 0.4 g/cu.cm and heat conductivity levels of less than 40 mW/mK_{,} and preferably less than 25 mW/mK.

9. A composite material according to at least one of claims 1 to 8, characterised in that the aerogel particles have hydrophobic surface groups.

10. A composite material according to at least one of claims 1 to 9, characterised in that the fibre fleece is provided on one or on both sides with in each case at least one outer layer, the outer layers being identical or different.

11. A composite material according to claim 10, characterised in that the outer layers contain synthetic plastics films, metal films, metallised synthetic plastics films or preferably layers of fleece consisting of fine single fibres and/or fine bicomponent fibres.

12. A composite material according to at least one of claims 1 to 11 in the form of a panel or mat.

13. A method of producing a composite material according to claim 1, characterised in that the aerogel particles are sprinkled into a fibre structure, preferably a fibre fleece which contains at least one thermoplastic fibre material, the resulting composite fibre material being solidified under heat, possibly under pressure and at temperatures above the lowest melting temperature.

14. Use of a composite material according to at least one of claims 1 to 12 for a heat insulation, sound insulation and/or as adsorption material for gases, vapours and liquids.

## Revendications

1. Matière composite qui présente au moins un produit constitué par des fibres et par des particules d'aérogel, caractérisée en ce que le produit fibreux contient au moins une matière fibreuse thermoplastique avec laquelle les particules d'aérogel et par laquelle les fibres sont reliées les unes aux autres dans le produit.

2. Matière composite selon la revendication 1, caractérisée en ce que le produit fibreux est un non-tissé fibreux.

3. Matière composite selon la revendication 1 ou 2, caractérisée en ce que le produit fibreux contient en outre au moins une matière fibreuse supplémentaire.

4. Matière composite selon au moins une des revendications 1 à 3, caractérisée en ce que le titre de la matière fibreuse thermoplastique se situe dans le domaine de 0,8 à 40 dtex.

5. Matière composite selon au moins une des revendications 1 à 4, caractérisée en ce que la fraction des particules d'aérogel dans la matière composite s'élève à au moins 40% en volume.

6. Matière composite selon au moins une des revendications 1 à 5, caractérisée en ce que l'aérogel est un aérogel de SiO₂.

7. Matière composite selon au moins une des revendications 1 à 6, caractérisée en ce que la matière fibreuse thermoplastique et/ou les particules d'aérogel contiennent au moins un opacifiant infrarouge.

8. Matière composite selon au moins une des revendications 1 à 7, caractérisée en ce que les particules d'aérogel présentent des porosités supérieures à 60%, des masses volumiques inférieures à 0,4 g/cm³ et des conductibilités thermiques inférieures à 40 mW/mK, de préférence inférieures à 25 mW/mK.

9. Matière composite selon au moins une des revendications 1 à 8, caractérisée en ce que les particules d'aérogel présentent des groupes superficiels hydrophobes.

10. Matière composite selon au moins une des revendications 1 à 9, caractérisée en ce que le non-tissé fibreux est muni, sur un côté ou sur les deux, de respectivement au moins une couche de recouvrement, les couches de recouvrement pouvant être identiques ou différentes.

11. Matière composite selon la revendication 10, caractérisée en ce que les couches de recouvrement contiennent des feuilles synthétiques, des feuilles métalliques, des feuilles synthétiques métallisées ou de préférence des couches de non-tissé constituées par de simples fibres fines et/ou par des fibres fines à deux composants.

12. Matière composite selon l'une quelconque des revendications 1 à 11 sous la forme d'une plaque ou d'un mat.

13. Procédé pour la fabrication d'une matière composite selon la revendication 1, caractérisé en ce qu'on introduit par dispersion les particules d'aérogel dans un produit fibreux, de préférence dans un non-tissé fibreux qui contient au moins une matière fibreuse thermoplastique, et on soumet le composite fibreux résultant à un thermodurcissage le cas échéant sous pression à des températures supérieures à la température de fusion la plus basse.

14. Utilisation d'une matière composite selon au moins une des revendications 1 à 12 pour le calorifugeage, pour l'isolation phonique et/ou à titre de matière d'adsorption pour des gaz, pour des vapeurs et pour des liquides.
